# FASCICULE DE BREVET EUROPEEN

(11) **EP 2 009 353 B1**
(45) Date de publication et mention de la délivrance du brevet: **21.07.2010**
(21) Numéro de dépôt: 08290417.8
(22) Date de dépôt: 30.04.2008
(51) Int. Cl.: F23G 5/027, F23G 5/033, F23G 5/30, F23G 7/02, F23G 7/10, F23K 1/02

(54) **Procédé de préparation d'une charge mixte contenant de la biomasse et une coupe hydrocarbonnée lourde en vue d'une gazéification ultérieure**
Verfahren zur Vorbereitung einer gemischten Ladung, die Biomasse und einen schweren Verschnitt auf Kohlenwasserstoffbasis enthält, zur späteren Vergasung
Method of preparing a mixed load containing biomass and a heavy hydrocarbon fraction with a view to subsequent gasification

(30) Priorité: 28.06.2007 FR 0704738
(43) Date de publication de la demande: 31.12.2008
(73) Titulaire: IFP, 92852 Rueil-Malmaison Cédex (FR)
(72) Inventeur: Rolland, Matthieu, 69390 Vernaison (FR)

(56) Documents cités:
- EP-A- 0 747 462
- WO-A-01/25689
- DE-A1- 10 153 975
- DE-C1- 19 643 572
- GB-A- 944 282

## Description

### DOMAINE DE L'INVENTION

La présente invention concerne un procédé de préparation d'une charge de type biomasse contenant de la matière fibreuse lignocellulosique, en mélange avec une coupe hydrocarbonée lourde en vue d'alimenter une unité de gazéification destinée en particulier à la production d'un gaz de synthèse.

On entend par coupe hydrocarbonée lourde une coupe de point d'ébullition supérieur à 350°C, par exemple un résidu sous vide ou une coupe dite HCO issue d'une unité de craquage catalytique, ou un mélange quelconque de ces diverses coupes.

L'unité de gazéification produit un gaz contenant essentiellement du monoxyde de carbone et de l'hydrogène, connu de l'homme du métier sous le nom de gaz de synthèse, appelé aussi quelquefois "Syngaz"ou "synthesis gaz" selon la terminologie anglo saxonne.

Dans la suite du texte nous conserverons l'appellation usuelle de gaz de synthèse.

Le gaz de synthèse permet ensuite de recomposer un ensemble de coupes hydrocarbures, notamment une coupe essence et une coupe gazole, au moyen de la synthèse Fischer Tropsch. Le gaz de synthèse peut également être utilisé comme vecteur en vue de la production d'énergie, ou comme matière première pour la production de bases pour la chimie et la pétrochimie.

La présente invention n'est pas liée à une utilisation particulière du gaz de synthèse, mais une application importante de la présente invention se situe dans la chaîne de production d'hydrocarbures de synthèse, notamment d'essences et du gazole, à partir d'une matière première constituée au moins en partie de biomasse, chaîne connue sous l'appellation de BTL. Plus précisément, la biomasse utilisée comme charge dans le cadre de la présente invention est de type lignocellulosique, par exemple des copeaux de bois de tout type, des déchets de paille ou de bagasse de canne à sucre, ou tout autre type de résidus ligneux.

Dans la suite du texte, nous utiliserons comme exemple typique de charge lignocellulosique des copeaux de bois résultant d'un déchiquetage préalable. L'étape de déchiquetage ne fait pas partie de la présente invention, mais peut en cas de besoin lui être ajouté en amont.

Ces copeaux de bois sont généralement livrés sous la forme de particules de quelques centimètres, et pouvant contenir jusqu'à 40 % d'eau. Ils constituent la charge biomasse dont il est question dans la suite du texte. On parlera plus particulièrement de plaquettes forestières lorsque les particules de bois auront sensiblement une forme de parallélépipède de dimensions typiques longueur/largeur/hauteur de 5cm/2cm/2 cm.

La présente invention permet le conditionnement de la charge biomasse en vue de son traitement ultérieur dans une unité de gazéification, plus particulièrement une unité de gazéification en lit entraîné qui nécessite une taille de particules en entrée de l'ordre de la centaine de microns. On entend par conditionnement de la charge, au sens de la présente invention, la constitution d'une suspension de fines particules de biomasse dispersées au sein d'une coupe hydrocarbonée lourde, appelé quelquefois "slurry" dans la terminologie anglo saxonne.

La suspension ainsi formée pourra également comprendre en plus des particules solides de biomasse, d'autres particules solides de granulométrie appropriée, telles que des particules de coke de pétrole ou des particules de charbon.

### EXAMEN DE L'ART ANTERIEUR

L'homme du métier connaît le procédé de prétraitement de matière de type biomasse sous forme de plaquettes comprenant une étape de prémélange de la biomasse avec un autre carburant afin d'obtenir un mélange présentant une capacité calorifique désirée (voir par exemple la demande de brevet DE-101 53 975).

L'homme du métier connaît également le procédé de thermolyse à des températures comprises entre 200°C et 250°C et des temps de séjour de l'ordre de quelques minutes, en vue de préparer une charge de type biomasse lignocellulosique pour être traitée ensuite dans des procédés en lit fluidisé ou entraîné, et notamment dans une unité de gazéification à lit entraîné. Il est en particulier connu que la thermolyse douce, ou torréfaction, modifie la structure de la biomasse de telle manière que les opérations ultérieures de broyage s'en trouvent facilitées.

La demande de brevet FR 06/07.049 de la demanderesse décrit un procédé de préparation de biomasse en vue d'alimenter une unité de gazéification qui fait appel à une pyrolyse douce ou torréfaction à une température comprise entre 250°C et 350°C.

Cette étape de torréfaction nécessite un apport de calories, et doit être précédée d'une étape de séchage réalisée à une température inférieure à 150°C, de préférence inférieure à 120°C, permettant d'arriver à une teneur en eau de la biomasse à traiter d'environ 10 % poids.

Dans la présente invention, le séchage est réalisé au cours de l'étape de mélange entre la biomasse et la coupe hydrocarbonée lourde. Il en résulte un gain économique substantiel.

De plus, l'étape de broyage de la biomasse dans le procédé selon la demande précitée, nécessite un refroidissement du solide de manière à éviter tout risque de combustion dudit solide à l'air ambiant. Le fait que, dans la présente invention, l'étape de broyage ait lieu non sur la biomasse seule, mais sur un mélange de biomasse et de coupe hydrocarbonée entourant les particules de biomasse, fait tomber cette contrainte de refroidissement.

Ce point a un impact très important sur l'économie du présent procédé qui est nettement plus favorable que celui de l'art antérieur basé sur une torréfaction des particules de biomasse.

Le procédé selon la présente invention délivre des particules de biomasse de taille inférieures à 500 microns sous forme d'une suspension desdites particules dispersées dans une coupe hydrocarbonée lourde, telle qu'un résidu sous vide, ou une coupe de type HCO.

### DESCRIPTION SOMMAIRE DES FIGURES

La figure 1 est un schéma du procédé de prétraitement selon l'invention qui sert de support à la description détaillée ci après. Les lignes marquées en pointillé correspondent à des éléments optionnels.
la figure 2 est une représentation schématique de l'unité employée pour réaliser l'étape de mélange.
la figure 3 est une représentation schématique de l'unité employée pour réaliser l'étape de broyage.

### DESCRIPTION SOMMAIRE DE L'INVENTION

La présente invention concerne un procédé de prétraitement d'une charge consistant en un mélange de matière lignocellulosique et d'une coupe hydrocarbonée lourde en vue de son traitement ultérieur dans une unité de gazéification, plus particulièrement en lit entraîné.

La matière première lignocellulosique est constituée de bois ou de déchets végétaux tels que des résidus de traitement de betterave, de cannes à sucre, ou autres végétaux utilisés pour la production de sucre ou d'éthanol. Cette matière première est généralement disponible sous forme de plaquette ou de copeaux de dimension maximale typique comprise entre 0,5 cm et 5 cm, et avec une teneur en eau comprise entre 10 % et 40 % poids.

Quelques exemples non limitatifs de matière biomasse lignocellulosique sont donnés ci dessous:
- Résidus d'exploitation agricole (paille...)
- Résidus d'exploitation forestière (produits de première éclaircie)
- Produits de l'exploitation forestière
- Cultures dédiées (taillis à courte rotation)
- Résidus de traitement de betterave, de cannes à sucre, ...

Le procédé de prétraitement de matière de type biomasse lignocellulosique selon la présente invention suppose que la biomasse soit disponible sous forme de copeaux de taille comprise entre 0,5 et 5 cm. Éventuellement une étape de broyage primaire ou déchiquetage sera nécessaire pour atteindre ladite taille de copeaux, mais elle ne fait pas partie intégrante de la présente invention.

La coupe hydrocarbure utilisée peut être une coupe dite résidu sous vide, ou une coupe HCO issue d'une unité de craquage catalytique, ou même plus généralement, une coupe hydrocarbonée qui soit simplement pompable aux conditions de stockage en raffineries.

La coupe hydrocarbure permettant de constituer la suspension peut également être un mélange en proportion quelconque des diverses coupe citées.

Il s'agit préférentiellement d'une coupe lourde, au sens où son point d'ébullition initial est supérieur à 350°C. En général, une telle coupe a une viscosité inférieure à 300 cSt à température de 150°C.

La suspension ainsi constituée peut être utilisée comme charge d'alimentation d'une unité de gazéification en lit entraîné en vue de produire un gaz de synthèse.

Le procédé de prétraitement de matière de type biomasse lignocellulosique selon l'invention permet de délivrer une suspension de particules de ladite biomasse de taille maximale inférieure à 500 microns, dispersées dans une coupe hydrocarbonée lourde de point d'ébullition initiale supérieur à 350°C, consistant en la suite d'étape suivante:
- une étape (1) de mélange de la biomasse avec la coupe hydrocarbonée lourde, de manière à atteindre un taux d'humidité des particules de biomasse inférieur à 10% poids, préférentiellement inférieur à 5% poids, et une température du mélange comprise entre 200°C et 300°C.
- une étape (2) de broyage du mélange de biomasse et de la coupe hydrocarbonée lourde permettant de réduire les particules de biomasse à une taille inférieure à 500 microns, la suspension formée ayant une teneur en biomasse inférieure à 30 % poids,
- une étape (3) d'alimentation de l'unité de gazéification par la suspension formée à l'étape (2) à une température comprise entre 200°C et 300°C.

Préférentiellement, l'étape de mélange est réalisée à une température comprise entre 250°C et 280°C avec un temps de séjour compris entre 1 et 20 minutes, et de manière encore préférée compris entre 5 et 15 minutes.

Le procédé selon l'invention permet donc de produire une suspension de particules de type biomasse lignocellulosique dispersées dans une coupe hydrocarbonée lourde, la taille des particules dans la suspension étant préférentiellement comprise entre 200 et 500 microns.

Il est possible, tout en restant dans le cadre de la présente invention, d'introduire en mélange avec les particules de biomasse des particules de coke de pétrole ou de charbon dans des proportions quelconques, avec toutefois un minimum de particules de biomasse supérieur à 5% poids dans le mélange. Ces particules autres que les particules de biomasse peuvent être introduites soit au niveau de l'étape de mélange, soit au niveau de l'étape de broyage, soit enfin an aval de ladite étape de broyage.

### DESCRIPTION DETAILLEE DE L'INVENTION

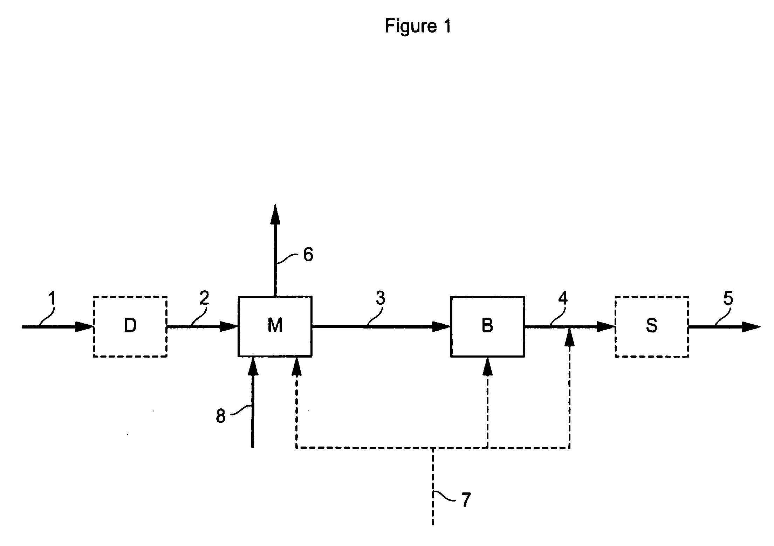

Dans cette partie du texte nous donnons une description du procédé selon l'invention au moyen de la figure 1, dans laquelle on a fait apparaître en pointillé les éléments facultatifs.

La charge lignocellulosique (flux 1) subit si besoin une étape de broyage grossier, ou déchiquetage, dans le broyeur primaire (D) qui amène la taille des particules de biomasse à des valeurs inférieures à 5 cm. La forme typique des particules de biomasse est celle d'une plaquette d'environ 5 cm de longueur, 2 cm de largeur et 2 cm d'épaisseur.

### Étape (1) de mélange

En sortie de l'étape facultative de déchiquetage, la charge représentée par le flux (2) alimente l'unité de mélange (M). La coupe hydrocarbonée lourde est introduite dans l'unité de mélange par le flux (8).

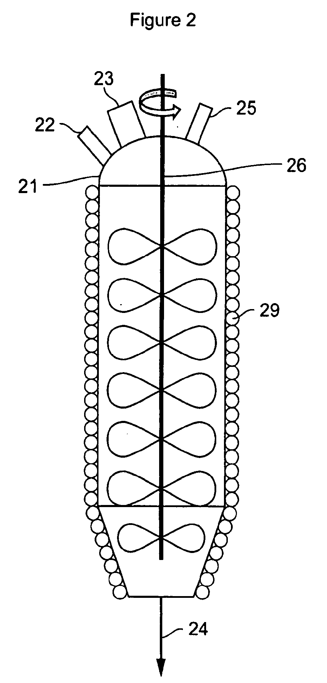

L'unité de mélange est une enceinte fermée, agitée et travaillant à pression atmosphérique dont une représentation schématique est donnée sur la figure 2.

L'objectif de l'unité de mélange (M) est d'une part de réaliser un mélange aussi intime que possible des particules de biomasse (2) avec la coupe hydrocarbonée lourde (8), et de réduire la teneur en eau de ladite charge à une valeur inférieure à 10% poids, et préférentiellement inférieure à 5 % poids.

Une certaine quantité d'eau est libérée au cours du mélange par le flux (6).

Les conditions opératoires préférées pour la réalisation de l'étape de mélange sont une température comprise entre 200°C et 300°C, et préférentiellement comprise entre 250°C et 280°C, et un temps de séjour des particules de biomasse compris entre 1 et 20 minutes, et préférentiellement compris entre 5 et 15 minutes.

La valeur du temps de séjour dépend principalement de la taille des particules de biomasse . A titre indicatif, pour des plaquettes de dimension longueur/largeur/hauteur de respectivement 5cm/2cm/2cm, le temps de séjour de l'étape de mélange est compris entre 5 et 15 minutes.

La coupe hydrocarbonée lourde (8) est réchauffée généralement par traçage à la vapeur avant d'être injectée dans l'unité de mélange (M) au moyen de la conduite (22) à une température comprise entre 250°C et 350°C.

La température d'entrée de la coupe hydrocarbonée lourde est calculée de manière à ce que la température de mélange après évacuation de la vapeur d'eau, soit comprise entre 200°C et 300°C, et préférentiellement comprise entre 250°C et 280°C.

Le choc thermique résultant de la mise en contact entre les particules de biomasse (2) à température ambiante et la coupe hydrocarbonée (8) à une température comprise entre 250°C et 350°C, conduit à une première fragilisation mécanique de la biomasse.

D'autre part, la libération de l'eau contenue dans les pores des particules de biomasse s'accompagne d'une augmentation de la pression interne dans les pores. Cette augmentation de pression interne a pour conséquence de favoriser la diffusion de l'eau du coeur des particules de biomasse vers l'extérieur et de contribuer également à fragiliser la biomasse.

L'unité de mélange (M) est constituée d'une enceinte (21) maintenue à la température voulue par un système dit de double enveloppe, tel que représenté sur la figure 2. Le fluide de chauffage circulant dans les tubes (29) est généralement de la vapeur à une température supérieure à la température de mélange.

L'enceinte (21) a généralement une forme étroite avec un rapport hauteur sur diamètre compris entre 10 et 2, et préférentiellement compris entre 5 et 2,5. La forme étroite permet un transfert thermique suffisant pour maintenir la température malgré les réactions endothermiques pouvant se produire lors du mélange entre les particules de biomasse et la coupe hydrocarbonée lourde.

Les particules de biomasse solide sont introduites dans l'enceinte (21) par gravité au moyen de la tubulure d'entrée (23) et mis en contact intime avec la coupe hydrocarbure lourde au moyen d'un agitateur mécanique à pales multiples (26) tel que par exemple, celui représenté schématiquement sur la figure 2. La vitesse de rotation de l'agitateur (26) est généralement comprise entre 1 et 20 tours/min.

Le débit d'alimentation des particules de biomasse est régulé par pesée au moyen d'un bac de stockage monté sur pesons situé au-dessus du mélangeur (M) (non représenté sur la figure 2). La coupe hydrocarbonée est introduite dans l'unité par la conduite (22) et l'eau est évacuée par la conduite (25).

Les particules de biomasse mélangée avec la coupe hydrocarbonée lourde sont évacuées de l'unité de mélange par la conduite (24).

Il est à noter que l'étape de mélange conduit à un enrobage des particules de biomasse par la coupe hydrocarbure liquide qui a deux effets positifs:
1) les particules de biomasse sont ainsi protégées de l'oxygène de l'air, en particulier lors de leur transfert vers l'étape suivante de broyage. Il n'est donc pas nécessaire d'utiliser un gaz inerte pour réaliser ce transfert.
2) l'hydrocarbure liquide entourant la particule de biomasse permet un excellent transfert de chaleur, et donc la réalisation d'un choc thermique brutal et l'évaporation consécutive de l'eau contenue dans les particules de biomasse.

L'eau quittant les particules de biomasse passe à travers la couche d'hydrocarbure entourant les dites particules du fait de la pression interne. Il résulte de ce processus la formation d'une mousse. Il a été expérimentalement observé que l'agitation mécanique par les pales permet de casser ladite mousse, et d'améliorer ainsi le taux de transfert de la vapeur d'eau depuis les particules vers la sortie de l'unité de mélange. Le gaz évacué par la conduite (25) contient majoritairement de l'eau (> 60% vol) et aussi quelques produits organiques légers (méthanol, furfural, acide acétique, ...).

Le flux (3) quittant l'unité de mélange (M) est constitué d'une phase continue d'hydrocarbures contenant des particules de biomasse à une température comprise entre 200°C et 300°C, préférentiellement entre 25°C et 280°C. Ce flux (3) est envoyé sans refroidissement dans l'unité de broyage (B), soit
- au moyen d'une pompe liquide / solide sans refroidissement lorsque les particules de biomasse ont une taille compatible avec un pompage, c'est à dire typiquement de l'ordre du cm pour une coupe hydrocarbonée lourde de type résidu sous vide,
- par gravité lorsque la taille des particules de biomasse est supérieure, en particulier lorsqu'il s'agit de plaquettes forestières de longueur/largeur/hauteur respectivement 5cm/2cm/2cm.

### Étape (2) de broyage

La biomasse ainsi traitée en sortie de l'étape de mélange est de manière remarquable, beaucoup plus facile à broyer que de la biomasse simplement séchée par contact avec un gaz chaud.

Cela provient en partie du fait que la biomasse est fragilisée par le choc thermique réalisé lors de l'étape de mélange.

En effet, la vitesse de chauffe des particules de biomasse au contact de la coupe hydrocarbonée lourde est de l'ordre de 10 à 100 fois plus élevée qu'au contact d'un gaz.

Au lieu de s'échauffer en 2-5 minutes, ce qui serait le cas avec un chauffage selon l'art antérieur par mise en contact avec un gaz chaud, l'élévation de température a lieu en quelques secondes. Cette rapide élévation de température conduit à une fragilisation des particules de biomasse et à une évaporation de l'humidité sous forme de vapeur "pressurisée". L'éjection plus ou moins brutale de cette vapeur pressurisée à l'extérieur des pores des particules de biomasse contribue également à la fragilisation mécanique.

Quelque soit le mécanisme exact de la fragilisation des particules de biomasse, l'énergie requise par l'étape de broyage est nettement réduite par rapport à ce qu'elle serait suite à un séchage selon l'art antérieur.

A titre d'illustration, on peut citer les valeurs de consommation énergétique suivante pour réduire typiquement la taille des particules de biomasse en moyenne de 20 mm à 1 mm, pour différents niveaux d'humidité des particules de biomasse:
- biomasse à 30% d'humidité : 90 KWh/tonne
- biomasse à 10% d'humidité : 50 KWh/tonne
- biomasse à 5 %-10% d'humidité : 30 KWh/tonne

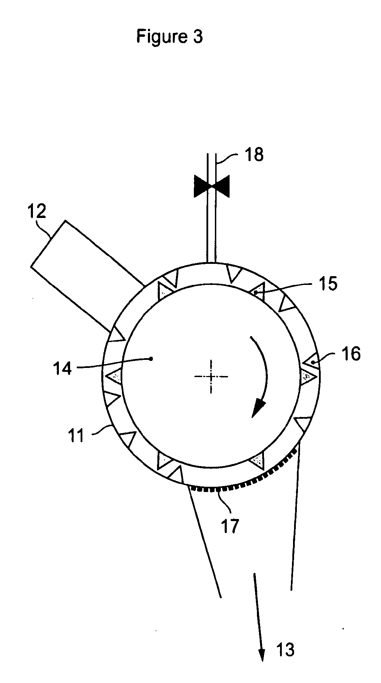

L'unité de broyage peut être décrite de la manière suivante au moyen de la figure 3:
La charge est injectée par la conduite (12) située en périphérie d'une enveloppe statique appelée stator (11). Un rouleau rotatif appelé rotor (14), équipé de protrusions contondantes (15) est situé à l'intérieur et de manière sensiblement concentrique au stator (11). Le stator (11) est équipé de protrusions contondantes (16). Le rotor (14) comporte sur une partie de sa surface interne des protrusions contondantes (15) de forme complémentaire à celles du stator (11), et sur une autre partie de sa surface une grille perforée (ou un grillage) (17) dont les trous ont une dimension unique.

Par forme complémentaire des protrusions contondantes (15) et (16), il faut comprendre qu'il est impossible à une particule de ne pas être prise en cisaille entre des protrusions (15) et (16) du rotor (14) et du stator (11).

La charge à broyer est cisaillée entre les protrusions du rotor et du stator, et brisée en au moins 2 particules de taille inférieure.

Lorsque les particules ont une taille suffisamment petite, elles passent à travers la grille perforée (17) qui joue le rôle de tamis.

La dimension maximale des particules broyées peut être plus importante, au moins dans une certaine direction, que les passage de la grille (17). C'est en particulier le cas des particules en forme d'allumette. La taille des orifices de la grille (17) doit donc être inférieure à la taille maximale admise pour les particules après broyage. Cet écart de taille dépend principalement du type de biomasse traité.

L'espace compris entre le rotor (14) et le stator (11) est occupé par le mélange liquide /particule de biomasse. Un évent (18) situé au point le plus haut du stator permet d'évacuer tout gaz éventuellement contenu dans le broyeur au démarrage dudit broyeur.

Le mélange après broyage est évacué par la conduite (13).

Pour maintenir la température au niveau requis, le rotor (14) et le stator (11) sont réchauffés par un système à double paroi ou de type serpentin dans lequel circule un fluide chaud généralement de la vapeur. Le système de chauffage n'est pas représenté sur la figure 3.

Les protrusions (15) et (16) contendantes du rotor (14) et du stator (11) peuvent avoir des formes de lames (on parle aussi de couteaux), ou de pavés (on parle alors de marteaux), dont les arêtes sont aiguisées et éventuellement inclinées ou courbées pour accentuer l'effet de cisaille. Les formes de type couteaux effilés avec des arêtes droites ou courbes sont préférées car elles permettent de casser les fibres végétales par un cisaillement plus important. La présence d'hydrocarbures liquides au sein du mélange à broyer, du fait de sa conductivité thermique importante, empêche la formation de points chauds lors du broyage, de sorte que la température de la biomasse ne dépasse pas une température maximale de 300°C, et préférentiellement de 280°C en tout point à l'intérieur du broyeur.

Le couple de fonctionnement de l'unité de broyage peut être évalué par une augmentation de 50% par rapport au même équipement travaillant sur des particules de biomasse seules.

Au démarrage du broyeur, la coupe hydrocarbure liquide est envoyée dans un premier temps seule par la conduite (12) de manière à purger l'appareil de toute trace de gaz par ouverture de la vanne sur l'évent (18). Quand le broyeur est entièrement rempli de liquide, il est possible d'introduire alors le mélange coupe hydrocarbure et particules de biomasse au moyen de la conduite (12).

Lorsque la granulométrie recherchée pour les particules de biomasse est fine, il est préférable d'utiliser une succession de deux ou trois broyeurs réglés à des granulométries de plus en plus fines. Le ratio du diamètre initial / diamètre final est généralement compris entre 50 et 10 par unité de broyage, ce ratio diminuant lorsque les granulométries deviennent plus fines.

En d'autres termes, les différents broyeurs utilisés auront des ratios diamètre initial sur diamètre final de plus en plus petits dans le sens du procédé.

Ainsi, pour passer d'une plaquette de longueur/largeur/hauteur respectivement 5 cm/ 2 cm/ 2 cm, à une poudre de granulométrie maximale 200 microns, il est préférable d'utiliser 2 broyeurs, par exemple un premier avec une taille de grille de 2 mm (ratio de 25), et un deuxième avec une taille de grille de 180 microns (ratio de 11).

La notion de granulométrie de la poudre s'entend par référence au diamètre moyen des particules constituant ladite poudre. Ce diamètre moyen est défini de manière usuelle comme le diamètre d'une particule sphérique ayant le même rapport surface sur volume que la particule considérée (qui peut avoir une forme non sphérique).

La suspension peut également comporter en plus des particules de biomasse d'autres types de particules telles que, par exemple, des particules de coke de pétrole, ou des particules de charbon.

Ces particules notées (7) sur la figure 1, peuvent être introduites soit au niveau de l'étape de mélange (M), soit au niveau de l'étape de broyage (B), soit éventuellement en aval de l'étape de broyage (cela nécessite alors un autre mélangeur).

La suspension ainsi constituée, soit uniquement à partir de particules de biomasse, soit en mélange avec d'autres particules solide telles que des particules de coke ou même de charbon, a une teneur globale en particules solides qui représente de 5 % à 30 % poids.

### Transfert du mélange broyé vers l'unité de gazéification

Le produit obtenu après l'étape de broyage (2) est une suspension de particules de biomasse dispersées dans une coupe hydrocarbure liquide lourde (noté flux (4) sur la figure 1).

Une caractéristique importante de la suspension obtenue est de pouvoir être pompée et injectée dans le gazéifieur sous pression (généralement supérieure à 30 bar avec 1 bar = 10⁵ Pascal), ce qui requiert une viscosité de l'ordre de 100-300 cSt (abréviation de centistokes, soit 1/100 ième de stokes) selon les pompes et les technologies d'injecteur.

La viscosité de la suspension peut être ajustée avec la température, cependant cette dernière doit autant que possible rester inférieure à environ 300°C pour éviter tout risque de craquage de la coupe hydrocarbure. Ce craquage augmenterait en effet le risque d'encrassement des installations par dépôt de coke.

La granulométrie des particules de biomasse (et des éventuelles autres particules solide) est d'abord choisie de manière à être compatible avec la technologie de pompe et d'injection dans l'unité de gazéification.

Dans le cadre de l'invention, une taille moyenne minimale de 200 µm (microns) est préférée pour limiter le coût de broyage. Inversement, une taille maximale de 500 µm est préférée pour l'homogénéité des écoulements (absence de sédimentation par exemple).

Les contraintes de réactivité dans l'unité de gazéification sont également à prendre en compte, mais ne sont en général pas le facteur limitant pour les réactions de gazéification sous pression. La biomasse est une matière très réactive et des particules de taille moyenne comprise entre 200 et 500µm sont parfaitement adaptées à l'unité de gazéification ultérieure.

La présente invention permet ainsi d'obtenir une suspension de particules de biomasse de taille inférieure à 500 microns, et préférentiellement comprise entre 200 et 500 microns, dispersées dans une coupe hydrocarbure lourde de point d'ébullition initial supérieur à 350°C.

La suspension est ensuite injectée en continu dans le gazéifieur à la température de mélange, soit entre 200 et 300°C.

La pression d'injection est comprise entre 20 et 40 bars (1 bar = 10⁵ Pascal), ce qui permet de réduire la taille des équipements et de disposer d'une pression supérieure aux pressions requises en aval du gazéifieur (unité de synthèse FT ou turbines pour la production d'électricité). La mise en pression a lieu après l'étape de broyage au moyen d'une pompe (S). Cette mise en pression est très économique car réalisée avec une simple pompe contrairement aux technologies en particules sèches qui nécessitent la pressurisation alternée de sas, bidons (lock-hoppers) par des gaz neutres. En sortie de la pompe (S), on récupère un flux (5) prêt à être injecté dans l'unité de gazéification en aval (non représentée sur la figure 1).

### EXEMPLES

Des essais réalisés à l'échelle laboratoire ont montré qu'il est possible d'obtenir à partir de copeaux de bois dont la plus grande dimension est inférieure à 1 cm, et d'un résidu sous vide ( notée en abrégé RSV) de densité 1,037 kg/m3 et de point d'ébullition initial supérieur à 350°C une suspension de particules de bois de taille comprise entre 200 et 400 microns dispersées dans la coupe RSV.

La suspension obtenue a une concentration massique en bois de 10%, et une viscosité inférieure à 300 cSt (obtenue pour une température supérieure à 175°C).

Un bilan matière extrapolé à l'échelle industrielle selon le schéma du procédé de la figure 1 est donné ci dessous:

| **N° flux** | **Description** | **Débit (t/h)** | **Température (°C)** | **Diamètre moyen des particules** |
|---|---|---|---|---|
| 1 | particules de biomasse brute à 25% d'humidité | 100 | 25 | 2 cm |
| 7 | flux d'autres particules solides | 20 | 25 | 500 µm |
| 8 | flux de coupe HC lourde entrant au mélangeur | 400 | 300 | - |
| 3 | suspension particules de biomasse dans coupe HC après mélange | 480 | 250 | 2 cm |
| 6 | vapeur d'eau sortant du mélange | 20 | 250 | - |
| 4 | suspension particules de biomasse dans coupe HC après broyage | 480 | 250 | 180 µm |
| 5 | suspension prête à être injectée dans le gazéifieur | 500 | 250 | 180 µm |

## Revendications

1. Procédé de prétraitement de matière de type biomasse lignocellulosique disponible sous forme de plaquettes de taille maximale comprise entre 0,5 cm et 5 cm, en vue d'alimenter une unité de gazéification, consistant en la suite d'étape suivante:
- une étape (1) de mélange de la biomasse avec une coupe hydrocarbonée lourde de point d'ébullition initial supérieur à 350°C, réchauffée à une température comprise entre 250°C et 350°C, de manière à atteindre un taux d'humidité des particules de biomasse inférieur à 10% poids, préférentiellement inférieur à 5% poids, et une température du mélange comprise entre 200 et 300°C,
- une étape (2) de broyage du mélange obtenu à l'issue de l'étape (1) permettant de réduire les particules de biomasse à une taille inférieure à 500 microns, la suspension formée ayant une teneur en biomasse inférieure à 30 % poids,
- une étape (3) d'alimentation de l'unité de gazéification par la suspension formée à l'étape (2) à une température comprise entre 200°C et 300°C.

2. Procédé de prétraitement de matière de type biomasse lignocellulosique selon la revendication 1, dans lequel l'étape (1) de mélange est réalisée à une température comprise entre 250-280°C avec un temps de séjour compris entre 1 et 20 minutes, et préférentiellement compris entre 5 et 15 minutes.

3. Procédé de prétraitement de matière de type biomasse lignocellulosique selon l'une quelconque des revendications 1 à 2, dans lequel la taille des particules de biomasse dans la suspension à l'issue de l'étape (2) est comprise entre 200 et 500 microns.

4. Procédé de prétraitement de matière de type biomasse selon l'une quelconque des revendications 1 à 3, dans lequel l'étape de mélange (1) est réalisée dans un mélangeur (M) dont le rapport hauteur sur diamètre est compris entre 10 et 2, et préférentiellement compris entre 5 et 2,5.

5. Procédé de prétraitement de matière de type biomasse selon l'une quelconque des revendications 1 à 4, dans lequel l'étape de broyage (2) est réalisée dans un équipement de broyage (B) consistant essentiellement en un rotor en rotation à l'intérieur d'un stator munis tous deux de protrusions contondantes complémentaires.

6. Procédé de prétraitement de matière de type biomasse selon la revendication 5, dans lequel les protrusions contondantes équipant le rotor et le stator de l'équipement de broyage ont la forme de couteaux effilés, avec des arêtes droites ou courbes.

7. Procédé de prétraitement de matière de type biomasse selon l'une quelconque des revendications 1 à 6, dans lequel la coupe hydrocarbure lourde est un résidu sous vide ( RSV), ou une coupe HCO issue d'une unité de craquage catalytique, ou un mélange quelconque desdites coupes.

8. Procédé de prétraitement de matière de type biomasse selon l'une quelconque des revendications 1 à 7, dans lequel la suspension est constituée à la fois de particules de biomasse et de particules de coke de pétrole ou charbon, dans des proportions quelconques, l'ensemble des particules solide représentant entre 5% poids et 30 % poids de la suspension.

9. Procédé de prétraitement de matière de type biomasse selon l'une quelconque des revendications 1 à 8, dans lequel la suspension est constituée à la fois de particules de biomasse et de particules de coke de pétrole ou de charbon, les particules autres que les particules de biomasse étant introduites dans le mélangeur (M).

10. Procédé de prétraitement de matière de type biomasse selon l'une quelconque des revendications 1 à 8, dans lequel la suspension est constituée à la fois de particules de biomasse et de particules de coke de pétrole ou de charbon, les particules autres que les particules de biomasse étant introduites dans le broyeur.

11. Procédé de prétraitement de matière de type biomasse selon l'une quelconque des revendications 1 à 9, dans lequel la réduction de taille des particules de biomasse au niveau de l'étape de broyage (2) est réalisée au moyen de deux ou trois unités de broyage en série, les broyeurs opérant avec un rapport diamètre initial sur diamètre final compris entre 10 et 50, et ce rapport étant décroissant lorsqu'on passe d'un broyeur au suivant dans le sens du procédé.

12. Procédé de gazéification en lit entraîné utilisant comme charge la suspension de particules de biomasse dans une coupe hydrocarbure lourde, les particules de biomasse étant issues du prétraitement selon l'une quelconque des revendications 1 à 11.

## Claims

1. Process for pretreating the lignocellulosic biomass-type material that is available in the form of pellets with a maximum size of between 0.5 cm and 5 cm for the purpose of supplying a gasification unit, consisting hereinafter of the following stages:
- One stage (1) for mixing the biomass with a heavy hydrocarbon fraction with an initial boiling point that is higher than 350°C, heated to a temperature of between 250°C and 350°C, so as to reach a moisture level of the biomass particles that is less than 10% by weight, preferably less than 5% by weight, and a temperature of the mixture of between 200°C and 300°C,
- One stage (2) for grinding the mixture that is obtained at the end of stage (1), making it possible to reduce the biomass particles to a size that is less than 500 microns, whereby the suspension that is formed has a biomass content that is less than 30% by weight,
- One stage (3) for supplying the gasification unit by the suspension that is formed in stage (2) at a temperature of between 200°C and 300°C.

2. Process for pretreating the lignocellulosic biomass-type material according to claim 1, in which the mixing stage (1) is carried out at a temperature of between 250-280°C with a residence time of between 1 and 20 minutes and preferably between 5 and 15 minutes.

3. Process for pretreating the lignocellulosic biomass-type material according to any of claims 1 to 2, in which the size of the biomass particles in the suspension at the end of stage (2) is between 200 and 500 microns.

4. Process for pretreating the biomass-type material according to any of claims 1 to 3, in which the mixing stage (1) is carried out in a mixer (M) whose height to diameter ratio is between 10 and 2, and preferably between 5 and 2.5.

5. Process for pretreating the biomass-type material according to any of claims 1 to 4, in which the grinding stage (2) is carried out in a piece of grinding equipment (B) that essentially consists of a rotor in rotation inside a stator, both equipped with additional blunt protrusions.

6. Process for pretreating the biomass-type material according to claim 5, in which the blunt protrusions that equip the rotor and the stator of the piece of grinding equipment have the shape of tapered knifes, with straight or curved edges.

7. Process for pretreating the biomass-type material according to any of claims 1 to 6, in which the heavy hydrocarbon fraction is a vacuum residue (RSV) or an HCO fraction that is obtained from a catalytic cracking unit, or any mixture of said fractions.

8. Process for pretreating the biomass-type material according to any of claims 1 to 7, in which the suspension consists both of biomass particles and coke, petroleum or carbon particles, in any proportions, whereby the solid particles unit represents between 5% by weight and 30% by weight of the suspension.

9. Process for pretreating the biomass-type material according to any of claims 1 to 8, in which the suspension consists both of biomass particles and coke, petroleum or carbon particles, whereby the particles other than the biomass particles are introduced into the mixer (M).

10. Process for pretreating the biomass-type material according to any of claims 1 to 8, in which the suspension consists both of biomass particles and coke, petroleum or carbon particles, whereby the particles other than the biomass particles are introduced into the mill.

11. Process for pretreating the biomass-type material according to any of claims 1 to 9, in which the size reduction of the biomass particles within the grinding stage (2) is carried out by means of two or three grinding units in series, whereby the mills operate with an initial diameter to final diameter ratio of between 10 and 50, and whereby this ratio decreases when the operation moves from one mill to the next in the direction of the process.

12. Process for gasification in an entrained bed that uses as a feedstock the suspension of biomass particles in a heavy hydrocarbon fraction, whereby the biomass particles are obtained from pretreatment according to any of claims 1 to 11.

## Patentansprüche

1. Verfahren zur Vorbehandlung von Material vom Typ lignocellulosehaltige Biomasse, das in Form von Plättchen mit einer maximalen Größe im Bereich zwischen 0,5 cm und 5 cm verfügbar ist, um eine Vergasungseinheit zu versorgen, das aus der folgenden Abfolge von Schritten besteht:
- einem Schritt (1) zum Mischen der Biomasse mit einem schweren Kohlenwasserstoffschnitt mit einem Anfangssiedepunkt größer als 350 °C, der auf eine Temperatur im Bereich zwischen 250 °C und 350 °C erhitzt wird, um einen Feuchtegehalt der Biomassepartikel von weniger als 10 Gew.-%, vorzugsweise weniger als 5 Gew.-% und eine Temperatur des Gemischs im Bereich zwischen 200 und 300 °C zu erreichen,
- einen Schritt (2) zum Zerkleinern des Gemischs, das am Ende von Schritt (1) erhalten wurde, der es ermöglicht, die Biomassepartikel auf eine Größe von weniger als 500 Mikron zu reduzieren, wobei die gebildete Suspension einen Biomassegehalt von weniger als 30 Gew.-% aufweist,
- einen Schritt (3) zur Versorgung der Vergasungseinheit mit der Suspension, die in Schritt (2) gebildet wurde, bei einer Temperatur im Bereich zwischen 200 °C und 300 °C.

2. Verfahren zur Vorbehandlung von Material vom Typ lignocellulosehaltige Biomasse nach Anspruch 1, wobei der Schritt (1) zum Mischen bei einer Temperatur im Bereich zwischen 250 bis 280 °C mit einer Verweildauer im Bereich zwischen 1 und 20 Minuten und vorzugsweise im Bereich zwischen 5 und 15 Minute ausgeführt wird.

3. Verfahren zur Vorbehandlung von Material vom Typ lignocellulosehaltige Biomasse nach irgendeinem der Ansprüche 1 bis 2, wobei die Größe der Biomassepartikel in der Suspension am Ende von Schritt (2) im Bereich zwischen 200 und 500 Mikron liegt.

4. Verfahren zur Vorbehandlung von Material vom Typ Biomasse nach irgendeinem der Ansprüche 1 bis 3, wobei der Schritt des Mischens (1) in einem Mischer (M) ausgeführt wird, wobei das Verhältnis Höhe zu Durchmesser im Bereich zwischen 10 und 2 und vorzugsweise im Bereich zwischen 5 und 2,5 liegt.

5. Verfahren zur Vorbehandlung von Material vom Typ Biomasse nach irgendeinem der Ansprüche 1 bis 4, wobei der Schritt des Zerkleinerns (2) in einer Zerkleinerungsapparatur (B) ausgeführt wird, die im Wesentlichen aus einem Rotor besteht, der im Innern eines Stators rotiert, wobei beide mit zusätzlichen stumpfen Protrusionen ausgestattet sind.

6. Verfahren zur Vorbehandlung von Material vom Typ Biomasse nach Anspruch 5, wobei die stumpfen Protrusionen, mit denen der Rotor und der Stator der Zerkleinerungsapparatur ausgestattet sind, die Form von spitzen Messern mit geraden oder geschwungenen Kanten haben.

7. Verfahren zur Vorbehandlung von Material vom Typ Biomasse nach irgendeinem der Ansprüche 1 bis 6, wobei der schwere Kohlenwasserstoffschnitt ein Vakuumrückstand (VR) oder ein HCO-Schnitt ist, der aus einer Einheit zum katalytischen Cracken stammt, oder ein beliebiges Gemisch der Schnitte.

8. Verfahren zur Vorbehandlung von Material vom Typ Biomasse nach irgendeinem der Ansprüche 1 bis 7, wobei die Suspension gleichzeitig aus Biomassepartikeln und Petrolkoks- oder Kohlekokspartikeln in beliebigen Anteilen besteht, wobei die Gesamtheit der festen Partikel zwischen 5 Gew.-% und 30 Gew.-% der Suspension darstellt.

9. Verfahren zur Vorbehandlung von Material vom Typ Biomasse nach irgendeinem der Ansprüche 1 bis 8, wobei die Suspension gleichzeitig aus Biomassepartikeln und Petrolkoks- oder Kohlekokspartikeln besteht, wobei Partikel, die keine Biomassepartikel sind, in den Mischer (M) eingeführt werden.

10. Verfahren zur Vorbehandlung von Material vom Typ Biomasse nach irgendeinem der Ansprüche 1 bis 8, wobei die Suspension gleichzeitig aus Biomassepartikeln und Petrolkoks- oder Kohlekokspartikeln besteht, wobei Partikel, die keine Biomassepartikel sind, in den Zerkleinerer eingeführt werden.

11. Verfahren zur Vorbehandlung von Material vom Typ Biomasse nach irgendeinem der Ansprüche 1 bis 9, wobei die Reduktion der Größe der Biomasseteilchen im Zerkleinerungsschritt (2) mit Hilfe von zwei oder drei in Reihe geschalteten Zerkleinerungseinheiten ausgeführt wird, wobei die Zerkleinerer mit einem Verhältnis von Anfangsdurchmesser zu Enddurchmesser im Bereich zwischen 10 und 50 arbeiten, und dieses Verhältnis absteigend ist, wenn man in Verfahrensrichtung von einem Zerkleinerer zum nächsten übergeht.

12. Verfahren zur Vergasung im Flugstaubreaktor, das als Beschickung die Suspension aus Biomassepartikel in einem schweren Kohlenwasserstoffschnitt verwendet, wobei die Biomassepartikel aus der Vorbehandlung nach irgendeinem der Ansprüche 1 bis 11 stammen.
